# EUROPÄISCHE PATENTSCHRIFT

(11) **EP 3 317 174 B1**
(45) Veröffentlichungstag und Bekanntmachung des Hinweises auf die Patenterteilung: **06.11.2024**
(21) Anmeldenummer: 16731133.1
(22) Anmeldetag: 21.06.2016
(51) Int. Cl.: B62K 21/14, B29C 45/14, B62K 21/26

(54) **LENKEINRICHTUNG**
STEERING DEVICE
SYSTÈME DE DIRECTION

(30) Priorität: 01.07.2015 DE 102015212295
(43) Veröffentlichungstag der Anmeldung: 09.05.2018
(73) Patentinhaber: Bayerische Motoren Werke Aktiengesellschaft, 80809 München (DE)
(72) Erfinder: JÄGER, Elmar, 87439 Kempten im Allgäu (DE); SCHRUPP, Rudolf, 82110 Germering (DE)
(86) Internationale Anmeldenummer: PCT/EP2016/064279
(87) Internationale Veröffentlichungsnummer: WO 2017/001239

(56) Entgegenhaltungen:
- EP-A2- 1 577 204
- CN-A- 101 293 553
- DE-U1- 202014 101 078
- US-A1- 2003 177 609
- US-A1- 2003 226 421
- US-A1- 2011 067 522
- US-B1- 6 421 879

## Beschreibung

Die vorliegende Erfindung betrifft eine Lenkeinrichtung, insbesondere für Einspurfahrzeuge gemäß dem Oberbegriff des Patentanspruchs 1.

Einspurfahrzeuge sind aus dem Stand der Technik als Motorräder, Motorroller, Tretroller, Fahrräder, usw. bekannt. Darüber hinaus sind auch Trikes, Quads, und Schneemobile bekannt. Alle diese Fahrzeuge werden von einem Fahrer über eine Lenkeinrichtung, beispielsweise einen Lenker, gesteuert. Durch händische Betätigung des Lenkers kann das richtungsgebende Vorderrad bzw. können die richtungsgebenden Vorderräder oder Kufen so verstellt werden, dass Kurvenfahrten möglich sind.

Zeitgenössische Lenker für Einspurfahrzeuge sind im Allgemeinen aus metallischen Werkstoffen, insbesondere aus Stahl oder Aluminium, gefertigt. Metallische Lenker haben jedoch den Nachteil, dass sie empfindlich für die Übertragung von Vibrationen sind. Diese Vibrationen verursachen Schwingungen an den Rückspiegeln, die an den Randbereichen der Lenker befestigt sind. Dadurch ergeben sich Komforteinbußen, da ein Fahrer die Darstellungen im Rückspiegel nur erschwert erkennen kann. Ferner sind im Allgemeinen auch Ausgleichsbehälter für Brems- und Kupplungsflüssigkeits ebenfalls an dem Lenker angeordnet. Die Vibrationen erzeugen ein Aufschäumen dieser Flüssigkeiten, was in besonders ungünstigen Fällen sogar Sicherheitseinbußen nach sich ziehen kann.

Um diese Schwingungen zu reduzieren, hat es sich am Markt etabliert Zusatzgewichte zu verwenden, die an den stirnseitigen Enden des Lenkers befestigt werden. Diese stellen als zusätzliches Bauteil eine unnötige Erhöhung des Gesamtfahrzeuggewichts dar. Ferner sind diese Schwingungsdämpfer fehleranfällig, da sich deren Befestigungsschrauben leicht lösen und damit der Schwingungsdämpfer häufig verloren geht.

Zudem haben Lenker aus Aluminium den Nachteil einer hohen Wärmeleitfähigkeit. Gerade bei den in letzter Zeit verbreitet aufkommenden Griffheizungen stellt sich der Nachteil ein, dass die für die Griffe bestimmte Wärme stark durch Wärmeverluste die in den Lenker wandern vermindert wird.

Aus der US 2003/0226421 A1 sind Griffe für Fahrradlenker bekannt, die sich durch stoßdämpfende Eigenschaften auszeichnen.

Aus der CN 101293553 A sind Fahrradgriffe bekannt, sowie ein Verfahren zur Herstellung der Fahrradgriffe, in denen ein Fasermaterial vorgesehen ist, das von einem Kunststoffmaterial umgeben ist. Dokument CN 101 293 553 offenbart den Oberbegriff des Anspruchs 1.

Die US 2003/0177609 A1 zeigt ebenfalls einen Lenkergriff für Fahrräder oder ähnliche Fahrzeuge.

Ebenso ist aus der EP 1 577 204 A2 ein Lenkergriff für Fahrräder oder Motorräder bekannt.

Die DE 20 2014 101 078 U1 zeigt ein Verbundbauteil mit Klemmsitz, insbesondere einen Lenkerbügel oder eine Sattelstütze.

Ausgehend von diesem Stand der Technik macht es sich die vorliegende Erfindung zur Aufgabe, eine Lenkeinrichtung anzugeben, die sich durch ein geringes Gewicht und eine geringe Empfindlichkeit gegenüber Schwingungen auszeichnet.

Diese Aufgabe wird mit einer Lenkeinrichtung mit den Merkmalen des unabhängigen Patentanspruchs gelöst. Die abhängigen Patentansprüche stellen vorteilhafte Ausführungsformen der Erfindung dar.

Zur Lösung dieser Aufgabe schlägt die Erfindung eine Lenkeinrichtung, für Motorräder, Motorroller, Trikes, Quads oder Schneemobile mit einer Tragstruktur, einer Ummantelung, welche eine Oberfläche der Tragstruktur zumindest abschnittsweise umgibt, und einem Schwingungsdämpfer vor. Die Tragstruktur kann als Rohr mit kreisrundem, ovalem oder auch eckigem Querschnittsprofil ausgebildet sein. Dieses Profil kann sich in seiner axialen Richtung gerade, gekrümmt oder gekröpft ausgebildet sein. Darüber hinaus kann der Schwingungsdämpfer an einer Seite der Ummantelung vorgesehen sein, die der Tragstruktur zugewandt ist. Eine derartige Anordnung bietet den Vorteil einer sehr kompakten Bauweise.

Gemäß einer ersten Ausführungsform ist der Schwingungsdämpfer in der Ummantelung integriert ausgebildet. Mit anderen Worten, der Schwingungsdämpfer ist Bestandteil der Ummantelung und somit einstückig ausgebildet. Hieraus ergeben sich unter Anderem Fertigungsvorteile bei der Herstellung des Lenkers, da weniger Einzelteile gefügt werden müssen. Weiterhin kann der Schwingungsdämpfer als Lage oder Schicht in der Ummantelung ausgebildet sein. Neben der sehr Bauraum sparenden, kompakten Bauweise bietet dieser Aufbau fertigungstechnische Vorteile, da während der Herstellung der Ummantelung der Schwingungsdämpfer integriert wird.

Gemäß einer zweiten alternativen Ausführungsform der Erfindung, ist der Schwingungsdämpfer zwischen der Tragstruktur und der Ummantelung angeordnet. Gemäß dieser Ausführungsform kann der Schwingungsdämpfer als separate Zwischenschicht oder als Zwischenlage ausgebildet sein. Der Aufbau gemäß der zweiten Ausführungsform bietet Vorteile hinsichtlich einer großen Variabilität. Die Auswahl der Schwingungsdämpfer und damit der dämpfenden Eigenschaften kann somit in Abhängigkeit davon erfolgen, je nachdem welche Frequenzen bzw. Schwingungen gedämpft werden sollen. In beiden Ausführungsformen kann die Tragstruktur aus Metall, insbesondere aus einem Leichtmetall, wie Aluminium, Magnesium, Titan, usw. ausgebildet sein.

Erfindungsgemäß, ist die Ummantelung aus faserverstärktem Kunststoff ausgebildet.

Die Verstärkungsfasern können organische oder anorganische Verstärkungsfasern sein. Die Verstärkungsfasern sind Kohlenstofffasern.

Diese bilden mit der Kunststoffmatrix einen kohlenstofffaserverstärkten Kunststoff, auch CFK (Carbon-faserverstärkter-Kunststoff), englisch: carbon-fibre-reinforced-plastic (CFRP), genannt. Das zugehörige FVK-Bauteil ist dann ein CFK-Bauteil. Die Verstärkungsfasern können beispielsweise auch aus Glasfasern ausgebildet sein. Diese bilden mit der Kunststoffmatrix einen glasfaserverstärkten Kunststoff, auch GFK genannt. Das zugehörige faserverstärkte Kunststoffbauteil ist dann ein GFK-Bauteil. Jedoch soll die Erfindung nicht darauf beschränkt sein, und die Verstärkungsfasern können z. B. auch Aramid-Fasern, Polyester-Fasern, Nylon-Fasern, Polyethylen-Fasern, PMMA-Fasern, Basalt-Fasern, BorFasern, Keramik-Fasern, Kieselsäure-Fasern, Stahl-Fasern und/oder Naturfasern sein. Unter ökonomischen Gesichtspunkten betrachtet, können alle genannten Fasern auch Recycling-Fasern sein.

Das Material der Kunststoffmatrix mag insbesondere ein oder mehrere thermoplastische Kunststoffe (Thermoplastik) und/oder duroplastische Kunststoffe (Duroplastik) aufweisen. Faserverstärkte Kunststoffe mit einer thermoplastischen Matrix weisen den Vorteil auf, dass sie sich nachträglich umformen oder verschweißen lassen. Erfindungsgemäß, sind thermoplastische Kunststoffe Polyetheretherketon (PEEK), Polyphenylensulfid (PPS), Polysulfon (PSU), Polyehterimid (PEI) und/oder Polytetrafluorethylen (PTFE) geignet.

Faserverstärkte Kunststoffe mit einer duroplastischen Matrix lassen sich nach dem Aushärten bzw. dem Vernetzen der Matrix nicht mehr umformen. Sie weisen vorteilhafterweise einen hohen Temperatureinsatzbereich auf. Dies gilt besonders für heißhärtende Systeme, die unter hohen Temperaturen ausgehärtet werden. Faserverstärkte Kunststoffe mit duroplastischer Matrix weisen meist die höchsten Festigkeiten auf. Erfindungsgemäß, kommen duroplastische Kunststoffe bzw. Matrix nämliche eines der folgende Harze, zur Anwendung: Epoxid-Harz (EP), ungesättigte Polyesterharze (UP), Vinylesterharze (VE), Phenol Formaldehydharz (PF), Methacrylatharze (MA), Polyurethan (PUR), Aminoharze, Melaminharze (MF/MP) und/oder Harnstoffharz (UF). Die Verwendung von faserverstärktem Kunststoff bietet den Vorteil, dass die Tragstruktur dünnwandiger ausgebildet werden kann, wodurch sich Gewichtsvorteile bei gleichen mechanischen Eigenschaften der gesamten Lenkeinrichtung ergeben. Darüber hinaus bietet die Verwendung von kohlefaserverstärktem Kunststoff den Vorteil, dass eine thermische Isolation erzeugt wird. Dies hat einen höheren Wirkungsgrad der Griffheizung zur Folge.

In beiden Ausführungsformen ist, erfindungsgemäß, der Schwingungsdämpfer aus einem Elastomerkunststoff ausgebildet. Durch die Verwendung eines Elastomers kann eine besonders gute Schwingungsdämpfung erzeugt werden. Darüber hinaus übernimmt das Elastomer einen Korrosionsschutz zwischen der Ummantelung und der Tragstruktur. Nicht zuletzt kompensiert es die unterschiedlichen Wärmeausdehnungen zwischen der Ummantelung und der Tragstruktur.

Die Ummantelung kann die Tragstruktur vollständig oder abschnittsweise umschließen. Bevorzugt kann in Randabschnitten der Lenkeinrichtung eine Ummantelung vorgesehen sein, wobei ein Mittenabschnitt ummantelungsfrei bleibt. Dies bietet den Vorteil, dass nur in den Randabschnitten, in denen die Griffe des Lenkers vorgesehen sind, eine Wärmeisolierung durch die Ummantelung erzeugt wird. Gleichzeitig ist in dem Mittenabschnitt, in dem üblicherweise eine klemmende Befestigung zu der Vorderradführung erfolgt, keine Ummantelung vorgesehen. Dadurch können höhere Klemmkräfte realisiert werden als in Ausführungsformen, in denen die Ummantelung durchgängig ausgebildet ist. Insbesondere Ummantelungen aus Kohlenstofffaser sind bei hohen Klemmkräften bruchgefährdet.

Im Folgenden soll die Erfindung anhand der Figurenbeschreibung näher erläutert werden. Die Beschreibung, die Ansprüche und die Figuren zeigen eine Vielzahl von Merkmalen, die ein Fachmann auch in anderer Kombination in Betracht ziehen würde, um die Erfindung an andere Anforderungen anzupassen.

Es zeigen in schematischer Darstellung
- **Fig. 1;**: eine Seitenansicht einer Tragstruktur einer Lenkeinrichtung,
- **Fig. 2:**: eine Schnittansicht durch einen Griffbereich einer Lenkeinrichtung gemäß einer ersten Ausführungsform, und
- **Fig. 3:**: eine Schnittansicht durch einen Griffbereich einer Lenkeinrichtung gemäß einer zweiten Ausführungsform.

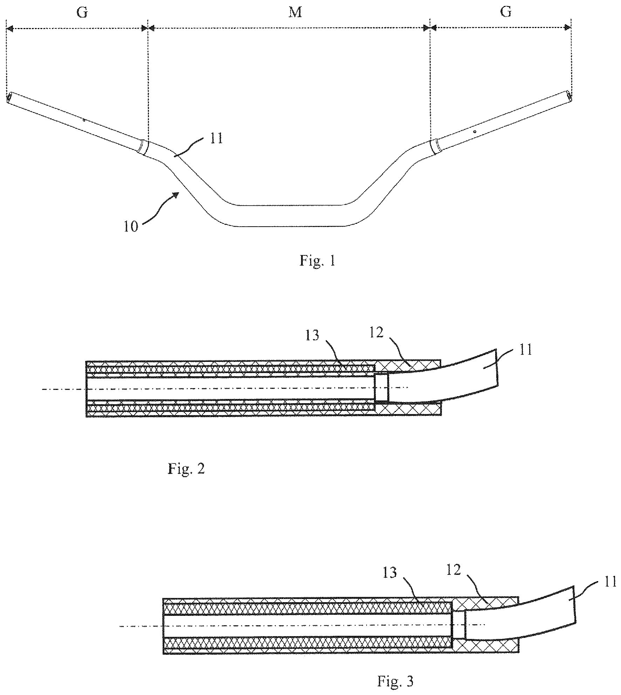

Fig. 1 zeigt eine Seitenansicht einer Lenkeinrichtung, in der nur die Tragstruktur 11 abgebildet ist. Die Tragstruktur 11 ist als Lenker dargestellt, die in axialer Richtung aus geraden, gebogenen und gekröpften Abschnitten ausgebildet ist. Die lateralen bzw. seitlichen Bereiche sind gekröpft. In den axialen Endbereichen sind Griffbereiche G vorgesehen, in denen Griffe montiert werden können. Der mittlere Bereich M dient zur Befestigung des Lenkers 10 an einer Vorderradführungseinrichtung, beispielsweise einer Vorderradgabel.

Fig. 2 zeigt eine Schnittansicht durch den Griffbereich G einer Lenkeinrichtung 10 gemäß einer ersten Ausführungsform. Die Tragstruktur 11 ist in diesem Bereich von einer Ummantelung 12 umgeben. Mit anderen Worten weist die Tragstruktur 11 eine im Wesentlichen zylindrische, prismenartige Form auf, deren axialer Verlauf jedoch nicht nur gerade Abschnitte sondern auch gekrümmte Abschnitte aufweisen kann. Auf der Mantelfläche dieses Prismas ist abschnittsweise die Ummantelung 12 aufgebracht. Bevorzugt ist die Ummantelung 12 aus einem kohlenstofffaserverstärkten Kunststoff gebildet. In die Ummantelung 12 ist integral, d. h. einstückig ein Schwingungsdämpfer 13 eingearbeitet. Dieser Schwingungsdämpfer 13 ist an einer Seite der Ummantelung 12, d. h. an einer inneren Seite der Ummantelung 12, ausgebildet, so dass er möglichst nahe an einer äußeren Mantelfläche der Tragstruktur 11 anliegt. Der Schwingungsdämpfer 13 ist dabei aus Elastomer gefertigt.

Die Ummantelung 12 ist ein kohlenstofffaserverstärkter Kunststoff, der aus mehreren einzelnen Lagen ausgebildet ist. Eine dieser Lagen oder Schichten ist folglich als Schwingungsdämpfer aus Elastomer 13 ausgebildet. Wie aus Fig. 2 ersichtlich ist, erstreckt sich der Schwingungsdämpfer 13 in axialer Richtung nicht vollständig durch die Ummantelung 12, sondern durchdringt sie nur abschnittsweise. Selbstverständlich kann sich der Schwingungsdämpfer 13 in einer weiteren, nicht dargestellten, Ausführungsform 13 in axialer Richtung vollständig, d. h. genauso weit wie die Ummantelung 12 erstrecken.

Eine zweite, alternative Ausführungsform der Erfindung ist in Fig. 3 dargestellt. Wie schon mit Bezug zur Fig. 2 erläutert, umfasst die Lenkeinrichtung 10 eine Tragstruktur 11, die von einer Ummantelung 12 umgeben ist. Zwischen der Ummantelung 12 und der Trägerstruktur 11 ist ein Schwingungsdämpfer 13 vorgesehen. Gemäß der in Fig. 3 gezeigten Ausführungsform ist der Schwingungsdämpfer 13 ein separates Bauteil und wird als Zwischenschicht zwischen die Trägerstruktur 11 und die Ummantelung 12 eingebracht. Auch hier ist der Schwingungsdämpfer 13 in seiner Längsrichtung kürzer als die Ummantelung 12 dargestellt. Ebenso kann in einer weiteren, nicht dargestellten, Ausführungsform der Schwingungsdämpfer 13 über die vollständige Länge der Ummantelung 12 ausgebildet sein.

Wie in Fig. 1 gezeigt, sind die Ummantelungen und die Schwingungsdämpfer lediglich im Griffbereich G angeordnet. In einer weiteren Ausführungsform der Erfindung kann die Trägerstruktur 10 jedoch durchgängig, d. h. in axialer Richtung vollständig von einer Ummantelung und/oder auch vollständig von einem Schwingungsdämpfer umgeben sein.

Die vorliegende Erfindung bietet damit auch den Vorteil, dass ein besonders leichter Lenker realisiert wird. Da der Lenker im Allgemeinen zu den höchst gelegenen Bauteil des Motorrads gehört, kann durch Reduktion des Lenkergewichts der Schwerpunkt des Motorrads effektiv abgesenkt werden.

## Patentansprüche

1. Lenkeinrichtung (10) für Motorräder, Motorroller, Trikes, Quads oder Schneemobile mit
- einer Tragstruktur (11), wobei in Randabschnitten der Lenkeinrichtung (10) Griffe vorgesehen sind,
- einer Ummantelung (12), welche eine Oberfläche der Tragstruktur (10) zumindest abschnittsweise umgibt und
- einem Schwingungsdämpfer (13),wobei der Schwingungsdämpfer (13) an einer Seite der Ummantelung (12) vorgesehen ist, die der Tragstruktur (11) zugewandt ist und die Ummantelung (12) aus faserverstärktem Kunststoff ausgebildet ist, und
- die Verstärkungsfasern Kohlenstofffasern sind, **dadurch gekennzeichnet, dass**
- der Schwingungsdämpfer (13) aus einem Elastomer Kunsttstoff ausgebildet ist und
- das Material der Kunststoffmatrix des faserverstärkten Kunststoff Polyetheretherketon, Polyphenylensulfid, Polysulfon, Polyehterimid, Polytetrafluorethylen, Epoxid-Harz , ungesättigte Polyesterharze, Vinylesterharze, Phenol Formaldehydharz, Methacrylatharze, Polyurethan, Aminoharze, Melaminharze und/oder Harnstoffharz aufweist.

2. Lenkeinrichtung (10) nach Anspruch 1, **dadurch gekennzeichnet, dass** der Schwingungsdämpfer (13) in der Ummantelung (12) integriert ist.

3. Lenkeinrichtung (10) nach Anspruch 2, **dadurch gekennzeichnet, dass** der Schwingungsdämpfer (13) als Lage oder Schicht in der Ummantelung (12) ausgebildet ist.

4. Lenkeinrichtung (10) nach Anspruch 1, **dadurch gekennzeichnet, dass** der Schwingungsdämpfer (13) zwischen der Tragstruktur (11) und der Ummantelung (12) angeordnet ist.

5. Lenkeinrichtung (10) nach einem der vorhergehenden Ansprüche, **dadurch gekennzeichnet, dass**
der Schwingungsdämpfer (13) als separate Zwischenschicht, zwischen der Tragstruktur (11) und der Ummantelung (13) ausgebildet ist.

6. Lenkeinrichtung (10) nach einem der vorhergehenden Ansprüche, **dadurch gekennzeichnet, dass**
die Tragstruktur aus Metall, insbesondere aus Leichtmetall ausgebildet ist.

7. Lenkeinrichtung (10) nach einem der vorhergehenden Ansprüche, **dadurch gekennzeichnet, dass**
in Randabschnitten (G) der Lenkeinrichtung (10) eine Ummantelung (12) vorgesehen ist und ein Mittenabschnitt (M) ummantelungsfrei ist.

## Claims

1. Steering device (10) for motorcycles, motor scooters, trikes, quad bikes or snowmobiles, having
- a supporting structure (11), wherein handles are provided in peripheral portions of the steering device (10),
- an encapsulation (12) which surrounds a surface of the supporting structure (10) at least in certain portions, and
- a vibration damper (13), wherein the vibration damper (13) is provided on a side of the encapsulation (12) that faces the supporting structure (11) and the encapsulation (12) is made from fibre-reinforced plastic, and
- the reinforcing fibres are carbon fibres, **characterized in that**
- the vibration damper (13) is made from an elastomer plastic, and
- the material of the plastics matrix of the fibre-reinforced plastic comprises polyether ether ketone, polyphenylene sulfide, polysulfone, polyetherimide, polytetrafluoroethylene, epoxy resin, unsaturated polyester resins, vinyl ester resins, phenol formaldehyde resin, methacrylate resins, polyurethane, amino resins, melamine resins and/or urea resin.

2. Steering device (10) according to Claim 1, **characterized in that** the vibration damper (13) is integrated in the encapsulation (12).

3. Steering device (10) according to Claim 2, **characterized in that** the vibration damper (13) is in the form of a ply or layer in the encapsulation (12).

4. Steering device (10) according to Claim 1, **characterized in that** the vibration damper (13) is arranged between the supporting structure (11) and the encapsulation (12).

5. Steering device (10) according to one of the preceding claims, **characterized in that**
the vibration damper (13) is in the form of a separate interlayer, between the supporting structure (11) and the encapsulation (13).

6. Steering device (10) according to one of the preceding claims, **characterized in that**
the supporting structure is made from metal, in particular from light metal.

7. Steering device (10) according to one of the preceding claims, **characterized in that**
an encapsulation (12) is provided in peripheral portions (G) of the steering device (10) and a centre portion (M) is free from encapsulation.

## Revendications

1. Dispositif de direction (10) pour motos, scooters, trikes, quads ou motoneiges avec
- une structure de support (11), des poignées étant prévues dans des sections de bord du dispositif de direction (10),
- une enveloppe (12) qui entoure au moins par sections une surface de la structure de support (10), et
- un amortisseur de vibrations (13), l'amortisseur de vibrations (13) étant prévu sur un côté de l'enveloppe (12) qui est tourné vers la structure de support (11) et l'enveloppe (12) étant réalisée en une matière plastique renforcée par des fibres, et
- les fibres de renforcement étant des fibres de carbone, **caractérisé en ce que**
- l'amortisseur de vibrations (13) est réalisé en une matière plastique élastomère, et
- le matériau de la matrice plastique de la matière plastique renforcée par des fibres présente de la polyétheréthercétone, du polysulfure de phénylène, de la polysulfone, du polyétherimide, du polytétrafluoroéthylène, de la résine époxy, des résines de polyester insaturées, des résines d'ester vinylique, de la résine phénol-formaldéhyde, des résines de méthacrylate, du polyuréthane, des résines aminées, des résines de mélamine et/ou de la résine d'urée.

2. Dispositif de direction (10) selon la revendication 1, **caractérisé en ce que** l'amortisseur de vibrations (13) est intégré dans l'enveloppe (12).

3. Dispositif de direction (10) selon la revendication 2, **caractérisé en ce que** l'amortisseur de vibrations (13) est réalisé en tant que couche ou strate dans l'enveloppe (12) .

4. Dispositif de direction (10) selon la revendication 1, **caractérisé en ce que** l'amortisseur de vibrations (13) est agencé entre la structure de support (11) et l'enveloppe (12).

5. Dispositif de direction (10) selon l'une quelconque des revendications précédentes, **caractérisé en ce que** l'amortisseur de vibrations (13) est réalisé en tant que couche intermédiaire séparée, entre la structure de support (11) et l'enveloppe (13).

6. Dispositif de direction (10) selon l'une quelconque des revendications précédentes, **caractérisé en ce que** la structure de support est réalisée en métal, notamment en métal léger.

7. Dispositif de direction (10) selon l'une quelconque des revendications précédentes, **caractérisé en ce que** une enveloppe (12) est prévue dans des sections de bord (G) du dispositif de direction (10) et une section centrale (M) est dépourvue d'enveloppe.
